Europäisches Patentamt

European Patent Office

Office européen des brevets

(11) Veröffentlichungsnummer: **0 134 035**
**B1**

(12) **EUROPÄISCHE PATENTSCHRIFT**

(45) Veröffentlichungstag der Patentschrift:
04.11.87

(21) Anmeldenummer: **84109868.4**

(22) Anmeldetag: **18.08.84**

(51) Int. Cl.⁴: **B 60 C 17/06**

(54) Notlaufring für schlauchlose Luftreifen von Kraftfahrzeugen.

(30) Priorität: **30.08.83 DE 3331143**

(43) Veröffentlichungstag der Anmeldung:
**13.03.85 Patentblatt 85/11**

(45) Bekanntmachung des Hinweises auf die Patenterteilung:
**04.11.87 Patentblatt 87/45**

(84) Benannte Vertragsstaaten:
**AT BE CH FR GB IT LI LU NL SE**

(56) Entgegenhaltungen:
**EP-A-0 011 698**
**EP-A-0 036 908**
**EP-A-0 084 490**
**FR-A-2 158 268**

(73) Patentinhaber: **VORWERK & SOHN GmbH. & Co.
KG., Obere Lichtenplatzer Strasse 336, D-5600
Wuppertal- Barmen (DE)**

(72) Erfinder: **Stein, Hermann, Dipl.- Chem.,
Scharpenacker Weg 12, D-5600 Wuppertal 2 (DE)**
Erfinder: **Piepenbrink, Ulrich, Ernst- Adolfstrasse
43, D-5830 Schwelm (DE)**

## Beschreibung

Die Erfindung betrifft einen aus Gummi oder anderen Elastomeren bestehenden Notlaufring in schlauchlosen Luftreifen auf zwei- oder mehrteiligen Felgen für Kraftfahrzeuge, der mit seinem Fußteil auf der Felge aufsitzt zwei beidseitig zur Reifenmitte angeordnete, einen mittig verlaufenden rinnenförmigen Umlaufkanal einschließende Stützteile aufweist sowie an der der Innenwand der Reifenlauffläche zugewandten Seite mindestens eine ein Gleitmittel enthaltende umlaufende Rille besitzt, die bei intaktem Luftreifen durch axiale Vorspannung geschlossen gehalten wird und von der mindestens eine Verschlußlippe das lastseitige Ende eines als Hebel ausgebildeten umlaufenden Stützteils bildet, welcher bei Eintritt des Notlaufs durch die von der Reifendecke übertragene Radlast einer Druckbeaufschlagung ausgesetzt ist, infolge welcher er die mit ihm verbundene Verschlußlippe von der Rille abhebt, wodurch das Gleitmittel freigesetzt wird und zur Schmierung zwischen die sich berührenden Flächen von Luftreifen und Notlaufring gelangt.

Aus der DE-A-30 08 972 ist ein Notlaufring gemäß dem Obergegriff des Anspruchs 1 bekannt, der über seine gesamte Flankenhöhe, also sowohl mit seinem Fußteil als auch mit seinem Oberteil, am Luftreifen anliegt und von den beiden Seitenrändern des Oberteils zur Ringmittelebene kuppelförmig ansteigt. Aufgrund dieser Bauform besitzt der bekannte Notlaufring ein relativ großes Volumen und somit auch ein entsprechend hohes Gewicht. Selbst ein Fahrzeug, das nur mit vier Rädern ausgerüstet ist, wird durch das hohe Ringgewicht erheblich belastet und in seinen Fahreigenschaften spürbar beeinträchtigt. Bei großen Radabmessungen wirkt sich dieser Nachteil in besonders starkem Maße aus. Außerdem stellt der voluminöse Ring einen großen Wärmespeicher dar, dessen Wärmeenergie mit fortschreitender Fahrtdauer erheblich anwächst und sowohl die Temperatur der Reifendruckluft als auch das Material des Luftreifens nachteilig beeinflußt. Schließlich bringt der Umstand, daß sich die Außenflanken dieses Ringes bei intaktem Luftreifen für die gesamte Dauer des normalen Fahrbetriebes über ihre gesamte Höhe ganzflächig mit dem Luftreifen berühren, den Nachteil mit sich, daß die Berührungsflächen in Abhängigkeit vom Luftdruck des Reifens ständig einer mehr oder minder starken Reibung mit entsprechendem Verschleiß unterworfen sind.

Der Erfindung liegt die Aufgabe zugrunde, einen Notlaufring zu schaffen, der ein möglichst geringes Gewicht aufweist und dem defekten Luftreifen eine laufstabile Abstützung bietet. Außerdem sollte er so ausgebildet sein, daß er im normalen Fahrbetrieb auch bei minimalem Reifenluftdruck die Flanken des intakgen Luftreifens nicht berührt.

Diese Aufgabe wird durch die in den Kennzeichen der Ansprüche angegebenen Merkmale gelöst.

Bei dem erfindungsgemäßen Notlaufring stützen die beiden im Abstand voneinander angeordneten umlaufenden Stützteile den defekten Luftreifen breitspurig ab und verschaffen ihm auf diese Weise eine abrutschsichere Abrollfläche für einen ruhigen Lauf. Darüber hinaus besitzen die Stützteile aufgrund ihrer Querschnittsform eine hohe Tragfähigkeit, die es gestattet, zwischen den Stützteilen einen großräumigen Umlaufkanal zu bilden, wodurch ein Notlaufring geringen Materialaufwands mit entsprechend niedrigem Gewicht verwirklicht ist. Vorteilhafterweise ist die Erwärmung dieses Notlaufringes während der Fahrt in engen Grenzen gehalten, da der Ring wegen seines minimierten Volumens einen relativ kleinen Wärmespeicher darstellt und zudem einer großflächigen Luftumspülung ausgesetzt ist, welche durch den geräumigen Umlaufkanal in Ringmitte sowie durch die beiden seitlichen Ringspalte ermöglicht wird.

Durch die erfindungsgemäß an den Außenseiten stufenförmig nach innen abgesetzten Stützteile ist zwischen diesen und dem Luftreifen ein Zwischenraum gebildet, der es im Bedarfsfall erlaubt, den Innendruck des Luftreifens minimal zu bemessen, ohne daß die Flanken des Reifens während des normalen Fahrbetriebs mit den Außenflanken der Stützteile in Kollision geraten.

Außerdem zeichnet sich der erfindungsgemäße Notlaufring dadurch aus, daß die schräg aufwärts nach außen gerichteten, gegebenenfalls den Fußteil seitlich überragenden Stützteile die Flanken des Luftreifens abstützen, wenn diese bei Kurvenfahrten der Einwirkung von Querkräften ausgesetzt sind.

Überdies besteht bei dem erfindungsgemäßen Notlaufring nicht die Gefahr, daß sich dann, wenn der Luftdruck im Reifen absichtlich niedrig gehalten wird, die das Gleitmittel enthaltenden Rillen öffnen, ohne daß die Notlaufsituation tatsächlich eingetreten ist. Vielmehr wird in diesem Fall der axiale Schließdruck auf die Rillen noch verstärkt.

Im Falle der Einzelradaufhängung mittels Pendelachsen läßt sich mit Vorteil auch eine asymmetrische Bauform des erfindungsgemäßen Notlaufringes einsetzen, und zwar derart, daß der dem Fahrzeug abgewandte Stützteil eine größere Bauhöhe als der dem Fahrzeug zugewandte Stützteil aufweist, wodurch die vertikale Achsabsenkung ausgeglichen wird.

Die Erfindung wird nachfolgend anhand von zwei in der Zeichnung in verkleinertem Maßstab dargestellten Ausführungsbeispielen des näheren erläutert. In der Zeichnung zeigen:

Fig. 1 einen in einen schlauchlosen Luftreifen eingebrachten und mit diesem auf eine mehrteilige Flachbettfelge aufgezogenen Notlaufring gemäß der Erfindung im Querschnitt,

Fig. 2 den Notlaufring nach Fig. 1 im Teilschnitt und in perspektivischer Darstellung und

Fig. 3 einen anderen, für eine größere Radabmessung bestimmten, in einen schlauchlosen Luftreifen eingebrachten und mit diesem auf eine zweiteilige Steilschulterfelge aufgezogenen Notlaufring gemäß der Erfindung im Querschnitt.

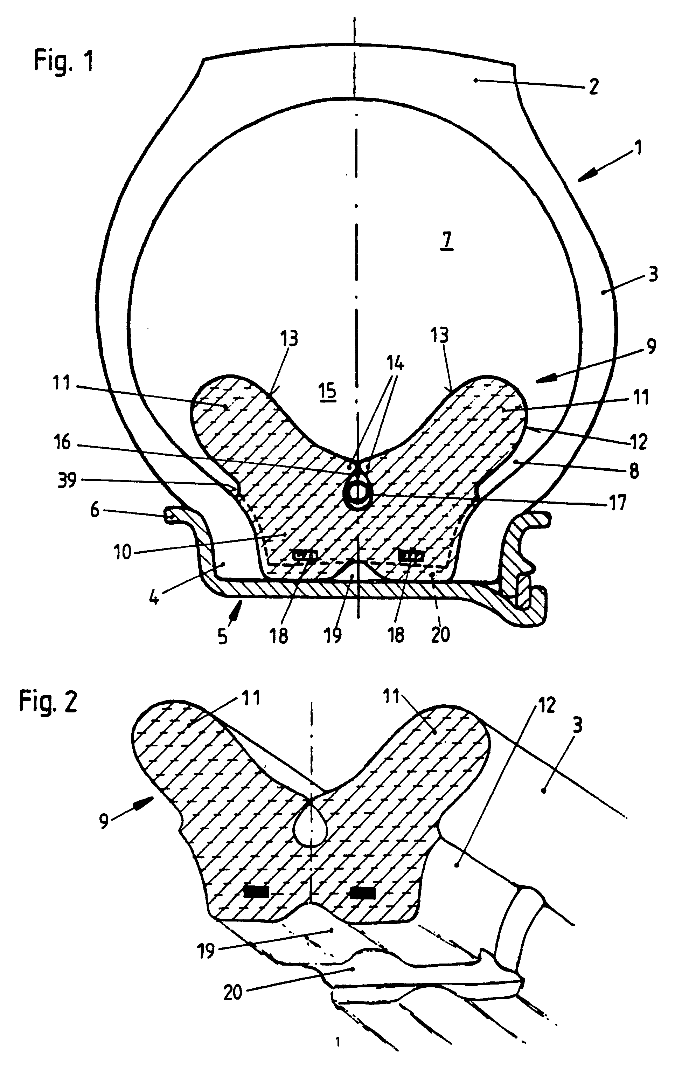

In Fig. 1 und 2 ist ein aus Gummi oder anderem Elastomermaterial bestehender Notlaufring 9 gezeigt, der zusammen mit einem Luftreifen 1 auf eine mehrteilige Flachbettfelge 5 durchschnittlicher Größe montiert ist. Der Notlaufring 9 besitzt einen Fußteil 10, der in zwei schräg aufwärts nach außen gerichtete umlaufende Stützteile 11 übergeht. Diese Stützteile 11 schließen einen rinnenförmigen Umlaufkanal 15 ein. Ihre der Reifendecke 2 zugewandten Scheitelflächen 13 steigen vom Umlaufkanal 15 nach außen deutlich an. Ihre Außenflanken 12 sind gegenüber dem Fußteil 10 durch eine nach innen abgesetzte Stufe 39 zurückgezogen, wodurch zwischen ihnen und den Reifenflanken 3 beidseitig je ein Ringspalt 8 gebildet ist. An den Boden des Umlaufkanals 15 schließt sich eine mittig angeordnete umlaufende Rille 16 an, welche von zwei von den Stützteilen 11 ausgehenden Dichtlippen 14 verschlossen wird. In der Rille 16 ist ein dünnwandiger, mit einem Gleitmittel gefüllter Schlauch 17 untergebracht.

Der Fußteil 10 ist durch zwei Stahldrahtringbündel 18 verstärkt, die dem Notlaufring 9 einen festen Sitz auf der Flachbettfelge 5 verschaffen. Auf seiner der Flachbettfelge 5 zugewandten Seite weist er einen umlaufenden Tunnel 19 auf, der durch mehrere über den Ringumfang verteilte, an den Flanken des Fußteils 10 entlanggeführte Durchlaßkanäle 20 mit dem Innenraum 7 des Luftreifens 1 verbunden ist. Beim Aufpumpen des Luftreifens 1 gewährleistet dieses Kanalsystem ein einwandfreies Einströmen der durch ein nicht eingezeichnetes Ventil eintretenten Luft in den Innenraum 7.

Bei der Herstellung des Notlaufringes 9 erhält dessen Fußteil 10 eine Breite, die größer als die lichte Weite zwischen den Reifenfüßen 4 ist. Beim Zusammenbau von Notlaufring 9, Luftreifen 1 und Flachbettfelge 5 wird der Fußteil 10 auf das Sollmaß zusammengedrückt, damit er zwischen den von den Felgenhörnern 6 seitlich abgestützten Reifenfüßen 4 Platz findet. Durch diese Maßnahme ist in vorteilhafter Weise erreicht, daß der Notlaufring 9 einen strammen Flankensitz innehat und daß zugleich ein zuverlässiger Schließdruck auf die umlaufende Rille 16 ausgeübt wird, in welcher der das Gleitmittel enthaltende Schlauch 17 untergebracht ist.

Verliert der Luftreifen 1 durch äußere Einwirkung die Luft, so wird er durch die ihn beaufschlagende Radlast plattgedrückt, wobei die Reifendecke 2 innenseitig zur abstützenden Anlage mit den Scheitelflächen 13 der beiden Stützteile 11 gelangt und die Radlast auf diese überträgt. Durch diese Lastbeaufschlagung werden die freien Enden der hebelarmartig ausgebildeten Stützteile 11 in die Ringspalte 8 gedrückt, wodurch eine Hebelwirkung auf die Dichtlippen 14 ausgeübt wird mit der Folge, daß deren Schließstellung aufgehoben und die Rille 16 geöffnet wird. In diesem Augenblick wird der Schlauch 17 dank der im Fahrbetrieb auftretenden Zentrifugalkraft aus der Rille 16 herausgeschleudert und zwischen den sich berührenden Flächen von Reifendecke 2 und Notlaufring 9 unter Freisetzung des Gleitmittels zerstört. Das austretende Gleitmittel verteilt sich sofort und führt eine erhebliche Reibungsminderung zwischen den Berührungsflächen herbei.

Als Gleitmittel sind solche Stoffe einzusetzen, die weder eine quellende noch eine andere schädigende Wirkung auf Elastomere ausüben, beispielsweise Polyglykole oder Salze von Fettsäuren.

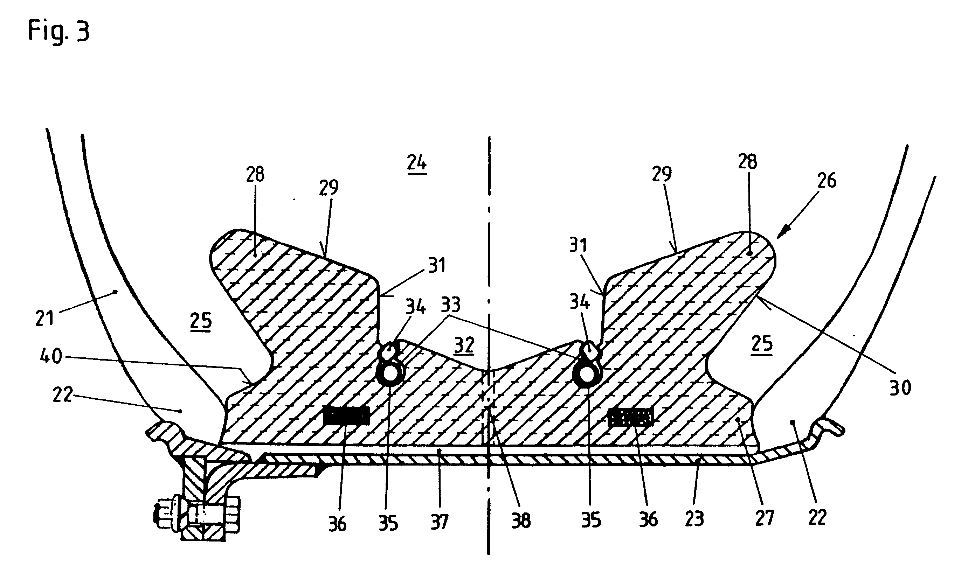

Fig. 3 zeigt einen erfindungsgemäß ausgebildeten Notlaufring 26, der für einen extrem breiten Luftreifen 21 mit zugehöriger zweiteiliger Steilschulterfelge 23 konzipiert ist. Dieser Notlaufring 26 besitzt eine außerordentlich flache Bauhöhe. Insbesondere haben die Stützteile 28 eine ausgeprägt schlanke Querschnittsform, die dadurch gebildet ist, daß die Scheitelflächen 29 eine starke Neigung aufweisen und die Außenflanken 30 gegenüber den Flanken des Fußteils 27 mit einer großen Stufe 40 zurückversetzt sind. Somit nimmt sowohl der mittig angeordnete, tiefbettige Umlaufkanal 32 sowie der jedem Stützteil 28 zugeordnete Ringspalt 25 ein relativ großes Volumen ein. Aufgrund dieser materialsparenden Bauform ist das Gewicht dieses Notlaufringes 26 optimal niedrig, was sich insbesondere auf ein stabiles Fahrverhalten des Fahrzeugs sowohl im Notlauf als auch bei intaktem Luftreifen 21 günstig auswirkt. Für diesen gewichtigen Vorteil kann ohne weiteres in Kauf genommen werden, daß die beiden an die Innenflanken 31 der Stützteile 28 sich anschließenden Rillen 33 zur Unterbringung der das Gleitmittel enthaltenden Schläuche 35 durch Spreizfüller 34 geschlossen gehalten werden müssen, da der im Bereich des ebenfalls sehr niedrig ausgeführten, zwischen den Reifenfüßen 22 gehaltenen Fußteils 27 in axialer Richtung wirkende Klemmdruck zumindest allein zum zuverlässigen Schließen der Rillen 33 nicht ausreicht.

Der Fußteil 27 ist durch mindestens zwei Stahldrahtringbündel 36 verstärkt. Die durch ein nicht eingezeichnetes Ventil eingepumpte Luft wird über Luftführungskanäle 37 und 38 dem Innenraum 24 des Luftreifens 21 zugeleitet.

Im übrigen ist bei diesem Notlaufring 26 dasselbe Funktionsprinzip wie bei dem zuvor beschriebenen Notlaufring 9 realisiert.

## Patentansprüche

1. Aus Gummi oder anderen Elastomeren bestehender Notlaufring (9, 26) in schlauchlosen Luftreifen (1, 21) auf zwei- oder mehrteiligen Felgen (5, 23) für Kraftfahrzeuge, der mit seinem Fußteil (10, 27) auf der Felge aufsitzt, zwei beidseitig zur Reifenmitte angeordnete, einen mittig verlaufenden, rinnenförmigen Umlaufkanal (15, 32) einschließende Stützteile (11, 28) aufweist sowie an der der Innenwand der Reifenlauffläche zugewandten Seite mindestens eine ein Gleitmittel enthaltende umlaufende Rille (16, 33) besitzt, die im nicht montierten Zustand der Notlaufrings und bei intaktem Luftreifen durch axiale Vorspannung geschlossen gehalten wird und von der mindestens eine Verschlußlippe (14) das lastseitige Ende eines als Hebel ausgebildeten umlaufenden Stützteils (11, 28) bildet, dessen Scheitelflächen (13, 29) bei Eintritt des Notlaufs durch die von der Reifendecke übertragene Radlast einer Druckbeaufschlagung ausgesetzt sind, infolge welcher der Stützteil die mit ihm verbundene Verschlußlippe von der Rille abhebt, wodurch das Gleitmittel freigesetzt wird und zur Schmierung zwischen die sich berührenden Flächen von Luftreifen und Notlaufring gelangt,

dadurch gekennzeichnet,

daß der Fußteil (10, 27) an jeder seiner beiden Flanken eine nach innen axial zur Reifenmitte zurückspringende Stufe (39, 40) aufweist und jeder Stützteil (11, 28) diese Stufe überragt, schräg aufwärts axial und radial nach außen gerichtet und durch einen Ringspalt (8, 25) von der benachbarten Flanke des intakten Luftreifens (1, 21) getrennt ist, daß die Rille von dem Umlaufkanal aus zugänglich ist, und daß die freien Enden der Stützteile (11, 28) bei Eintritt des Notlaufs von der Reifendecke axial nach außen in die Ringspalte (8, 25) gedrückt werden.

2. Notlaufring nach Anspruch 1, dadurch gekennzeichnet, daß die Rille (16, 33) durch einen die Öffnung verschließenden Spreizfüller (34) geschlossen gehalten wird.

3. Notlaufring nach Anspruch 1 oder 2, dadurch gekennzeichnet, daß der Stützteil (11, 28) eine vom Umlaufkanal (15, 32) zu seinem freien Ende hin schräg ansteigende Scheitelfläche (13, 29) besitzt.

4. Notlaufring nach Anspruch 1, dadurch gekennzeichnet, daß der dem Fahrzeug abgewandte Stützteil (11, 28) eine größere Bauhöhe als der dem Fahrzeug zugewandte Stützteil aufweist.

## Claims

1. An emergency rim support (9, 26) of rubber or other elastomers for location on rims (5, 23) of two or more parts in tubeless inflatable tyres (1, 21) for motor vehicles, the emergency rim support (9, 26) resting on the rim with its foot member (10, 27), and having two supporting members (11, 28) disposed on either side of the tyre centre and enclosing a central, groove-shaped continuous channel (15, 32), and at least one continuous groove (16, 33) disposed on the side facing the inner wall of the tyre running surface, the at least one continuous groove containing lubricant and being held closed by axial compression when the emergency rim support (9, 26) is unmounted, and when mounted in an inflatable tyre which is intact, at least one sealing lip (14) of the continuous groove forming the end of a continuous supporting member (11, 28) on the side of the load, the continuous supporting member being formed as a lever, the apex surfaces (13, 29) of which are exposed in an emergency to a pressure impact by the tyre load transferred from the tyre cover, as a result of which the supporting member lifts the sealing lip connected thereto away from the groove, whereby the lubricant is released and enters between the touching surfaces of the inflatable tyre and the emergency rim support, characterised in that the foot member (10, 27) has on each of its two flanks a resilient step (39, 40) towards the inside and axially towards the centre of the tyre, and each supporting member (11, 28) projects beyond this step (39, 40), slants upwards and is directed outwards, both axially and radially, and is separated from the adjacent flank of the intact tyre (1, 21) by an annular gap (8, 25), in that the groove (16, 33) is accessible from the continuous channel (15, 32) and in that in an emergency the free ends of the supporting members (11, 28) are pressed axially outwards into the annular gap (8, 25) by the tyre cover.

2. An emergency rim support according to claim 1, characterised in that the groove (16, 33) is held closed by an expanding filler (34) which seals the opening.

3. An emergency rim support according to claim 1 or 2, characterised in that the supporting member (11, 28) has an apex surface (13, 29) which slants up from the continuous channel (15, 32) to the free end of the supporting member (11, 28).

4. An emergency rim support according to claim 1, characterised in that the supporting member (11, 28) remote from the vehicle has a greater overall height than the supporting member adjacent the vehicle.

## Revendications

1. Support de sécurité (9, 26) consistant en du caoutchouc ou en un autre élastomère, pour bandages pneumatiques sans chambre à air (1, 21) de jantes (5, 23) en deux parties ou plus pour véhicules automobiles, qui repose sur la jante par sa semelle (10, 27), présentant deux parties d'appui (11, 28) disposées des deux côtés du milieu du bandage, contenant un canal circulaire en gouttière (15, 32) s'étendant dans le milieu, ainsi que, du côté intérieur de la surface de roulement du bandage, au moins une gorge circulaire (16, 33) contenant un lubrifiant, qui est tenue fermée, à l'état non monté du support de sécurité et quand le bandage est intact, par précontrainte par rapport à l'axe et dont au moins une lèvre de fermeture (14) constitue l'extrémité du côté de la charge d'une partie d'appui (11, 28) périphérique, conformée en levier, dont les surfaces supérieures (13, 29) subissent, lors de l'entrée en action du support de sécurité, en raison de la charge de la roue transmise par la bande de roulement du bandage, l'application d'une pression à la suite de laquelle la pièce d'appui écarte la lèvre de fermeture de la gorge à laquelle elle est reliée, de sorte que le lubrifiant est libéré et parvient, pour la lubrification, entre les surfaces en contact du bandage pneumatique et du support de sécurité, caractérisé en ce que la semelle (10, 27) présente sur chacun de ses deux flancs un gradin (39, 40) en retrait vers l'intérieur en sens axial par rapport au milieu du bandage, et chaque partie d'appui (11, 28) s'étend vers l'extérieur au-delà de ce gradin, obliquement vers le haut en sens radial par rapport à l'axe et est séparée du flanc voisin du bandage pneumatique intact (1, 21) par un intervalle annulaire (8, 25), cependant que la gorge (16, 33) est accessible à partir du canal circulaire (15, 32), et que les extrémités libres des pièces d'appui (11, 28) sont poussées par la bande de roulement du bandage dans les intervalles annulaires (8, 25) vers l'extérieur par rapport à l'axe, lors de l'entrée en action du support de sécurité.

2. Support de sécurité selon la revendication 1 caractérisé en ce que la gorge (16, 33) est tenue fermée par un écarteur de remplissage (34) obturant l'ouverture.

3. Support de sécurité selon la revendication 1 ou 2 caractérisé en ce que la partie d'appui (11, 28) a une surface supérieure (13, 29) montant obliquement à partir du canal circulaire (15, 32) vers son extrémité libre.

4. Support de sécurité selon la revendication 1 caractérisé en ce que la partie d'appui (11, 28) éloignée du véhicule présente une plus grande hauteur totale que la partie d'appui située du côté du véhicule.

0 134 035

Fig. 1

Fig. 2

Fig. 3

0 134 035